# EUROPÄISCHE PATENTSCHRIFT

(11) **EP 1 754 960 B1**
(45) Veröffentlichungstag und Bekanntmachung des Hinweises auf die Patenterteilung: **24.10.2012**
(21) Anmeldenummer: 06011884.1
(22) Anmeldetag: 09.06.2006
(51) Int. Cl.: G01F 1/84, H01F 27/02, H01F 27/22

(54) **Coriolis-Massendurchflussmessgerät**
Coriolis mass flowmeter
Débitmètre massique à effet Coriolis

(30) Priorität: 19.08.2005 DE 102005039577
(43) Veröffentlichungstag der Anmeldung: 21.02.2007
(73) Patentinhaber: Krohne AG, 4019 Basel (CH)
(72) Erfinder: Davies, Laurence, Corby Northamptonshire (GB)
(74) Vertreter: Gesthuysen, von Rohr & Eggert

(56) Entgegenhaltungen:
- DE-A1- 10 312 796
- JP-A- 8 338 749
- JP-A- 9 063 835
- JP-A- 2005 093 881
- US-A- 4 876 898

## Beschreibung

Die Erfindung betrifft ein Massendurchflußmeßgerät, das nach dem Coriolis-Prinzip arbeitet, mit einem Meßrohr und einem Schwingungserzeuger oder/und einem Schwingungsaufnehmer zur Anregung bzw. Erfassung von Schwingungen des Meßrohrs, wobei der Schwingungserzeuger bzw. der Schwingungsaufnehmer eine Magnetspule mit einem Spulenkörper und einer darauf angebrachten Wicklung aufweist.

Coriolis-Massendurchflußmeßgeräte sind aus dem Stand der Technik gut bekannt. Dabei existieren Geräte mit nur einem einzigen Meßrohr oder mit mehreren, häufig zwei parallelen Meßrohren, wobei das Meßrohr bzw. die Meßrohre gerade oder schleifenförmig ausgebildet sein können. Nach dem Coriolis-Prinzip arbeitende Massendurchflußmeßgeräte erfordern, daß das Meßrohr in Schwingungen versetzt wird und daß die bei durchflossenem Meßrohr resultierenden Schwingungen erfaßt werden.

Zur Anregung von Schwingungen des Meßrohrs bzw. zur Erfassung von Schwingungen des Meßrohrs sind häufig Magnetspulen vorgesehen. Wird eine solche Magnetspule mit einem Strom beaufschlagt, so erzeugt sie ein Magnetfeld, was bewirkt, daß das auf einen sich im Inneren der Magnetspule befindenden Magneten eine Kraft ausgeübt wird. Auf der Grundlage dieses Prinzips läßt sich ein Meßrohr eines Coriolis-Massendurchflußmeßgeräts zu Schwingungen anregen.

Durch die Beaufschlagung der Magnetspule mit einem Strom, also aufgrund der Tatsache, daß durch die auf dem Spulenkörper vorgesehene Wicklung der Magnetspule ein Strom fließt, kommt es jedoch auch zu einer Erwärmung der Magnetspule. Insbesondere bei Anwendungen des Coriolis-Massendurchflußmeßgeräts in explosionsgefährdeten Bereichen ist es erforderlich, diesen Temperaturanstieg zu beschränken.

Aus dem Stand der Technik ist es bisher allgemein bekannt, den Temperaturanstieg der Magnetspule dadurch zu beschränken, daß die entstehende Wärme auf eine größere Oberfläche als die durch die Magnetspule selbst gegebene Oberfläche abgeleitet wird. Insbesondere bei Hochleistungsanwendungen ist damit vorgesehen, die Wärme von der Magnetspule abzuleiten, indem diese mittels einer thermisch hochleitfähigen Ummantelung oder Einfassung auf einen meist metallischen Kühlkörper geleitet wird. Damit wird der Wärmefluß weg von der Magnetspule in die Umgebung der Magnetspule erleichtert, wodurch die Oberflächentemperatur der Magnetspule verringert wird. Diese Vorgehensweise ist jedoch hinsichtlich ihrer relativ hohen Kosten und der verringerten Effizienz aufgrund der Bildung von Wirbelströmen in dem metallischen Kühlkörper nachteilig.

Massendurchflussmessgeräte, die nach dem Coriolis_Prinzip arbeiten, sind aus US 4 876 898 und JP 08 338 749 bekannt. Die jeweiligen Schwingungserzeuger weisen eine Magnetspule mit einem Spulenkörper auf, der aus einer Edelstahllegierung besteht.

Dementsprechend ist es die Aufgabe der Erfindung, ein derartiges nach dem Coriolis-Prinzip arbeitendes Massendurchflußmeßgerät anzugeben, das in effizienter Weise für Hochleistungsanwendungen geeignet ist, ohne zu zu hohen Temperaturen einer zur Schwingungsanregung oder/und zur Erfassung von Schwingungen des Meßrohrs vorgesehenen Magnetspule zu führen.

Ausgehend von dem eingangs beschriebenen Massendurchflußmeßgerät ist diese Aufgabe dadurch gelöst, daß der Spulenkörper der Magnetspule aus thermisch leitfähigem Polyphenylensulfid besteht.

Die Magnetspule selbst, nämlich der Spulenkörper, ist derart ausgebildet, daß die entstehende Wärme ohne weitere Hilfsmittel gut an die Umgebung abgegeben werden kann. Im Gegensatz zur herkömmlichen Technik ist dies wesentlich kostengünstiger, wobei ferner aufgrund des möglichen Verzichts auf einen Kühlkörper, wie ein metallisches Kühlblech, die Erzeugung von Wirbelströmen vermieden werden kann, so daß der Wirkungsgrad der Magnetspule verbessert ist.

Ein besonders geeignetes Material, das von dem Unternehmen Cool Polymers, Inc. angeboten wird, ist das Polymer CoolPoly^{®} D5108 Thermally Conductive Polyphenylene Sulfide (PPS), das eine spezifische Wärmeleitfähigkeit von 10 W/(K m) aufweist. Dieses Material weist jedoch nicht nur eine gute spezifische Wärmeleitfähigkeit auf, um die in der Magnetspule entstehende Wärme an die Umgebung abzuleiten, sondern ist darüber hinaus über 250 °C temperaturbeständig und weist in dem nutzbaren Temperaturbereich mechanische Eigenschaften auf, die den Anforderungen bei einem Coriolis-Massendurchflußmeßgerät für den Spulenkörper einer Magnetspule zur Anregung oder/und Erfassung von Schwingungen des Meßrohres ohne weiteres genügen.

In der Zeichnung zeigt
- Fig. 1: schematisch ein Corialis-Massendurchflußmeßgerät gemäß einem bevorzugten Ausführungsbeispiel der Erfindung mit einem Schwingungsanreger und zwei Schwingungsaufnehmern im Schnitt und
- Fig. 2: eine Magnetspule für einen Schwingungsanreger bzw. einen Schwingungsaufnehmer des Coriolis-Massendurchflußmeßgeräts gemäß dem bevorzugten Ausführungsbeispiel der Erfindung

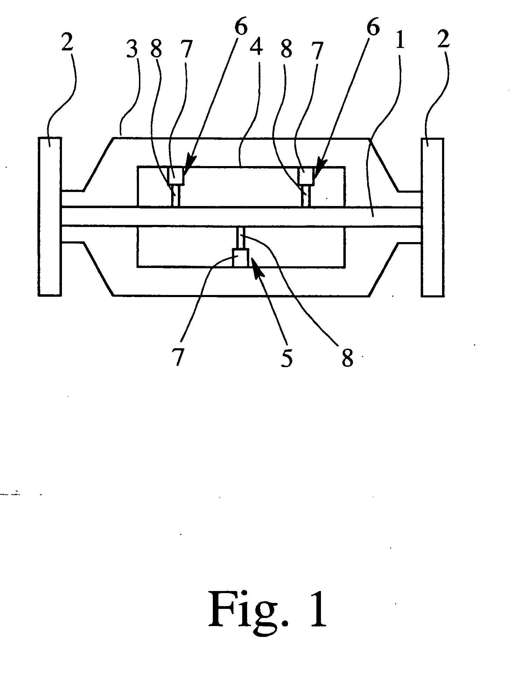

Aus Fig. 1 ist schematisch im Schnitt ein Coriolis-Massendurchflußmeßgerät gemäß einem bevorzugten Ausführungsbeispiel der Erfindung mit einem einzigen geraden Meßrohr 1 ersichtlich. Das Meßrohr 1 mündet mit seinen beiden Enden jeweils in einem Flansch 2, mit dem das Meßrohr 1 in ein nicht weiter dargestelltes Rohrleüungssystem eingebaut werden kann. Das Meßrohr 1 ist innerhalb eines Gehäuses 3 angeordnet, in dem außerdem ein innerer Zylinder 4 vorgesehen ist. Zwischen dem inneren Zylinder 4 und dem Meßrohr 1 befinden sich nun ein Schwingungserzeuger 5 sowie zwei Schwingungsaufnehmer 6.

Der Schwingungserzeuger 5 sowie die beiden Schwingungsaufnehmer 6 weisen jeweils eine Magnetspule 7 und einen in der Magnetspule 7 angeordneten Magneten 8 auf. Wie eingangs schon beschrieben, erzeugt eine jeweilige Magnetspule 7, wenn sie mit Strom beaufschlagt wird, ein Magnetfeld, was bewirkt, daß auf den sich im Inneren der Magnetspule 7 angeordneten Magneten 8 eine Kraft ausgeübt wird. Auf diese Weise wird der Schwingungserzeuger 5 betrieben, um das Meßrohr 1 des Coriolis-Massendurchflußmeßgeräts zu Schwingungen anzuregen.

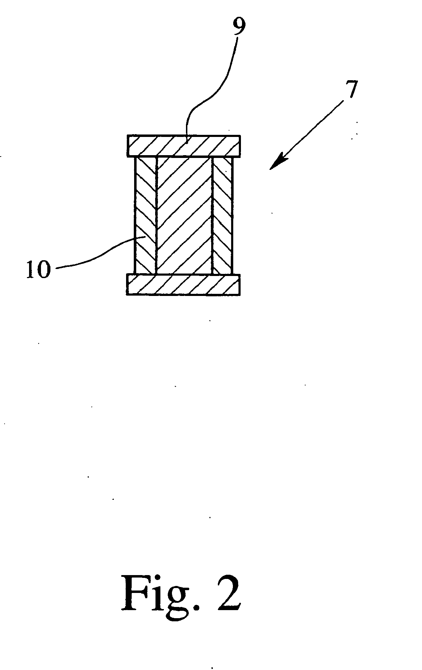

Aus Fig. 2 ist nun eine Magnetspule 7 im Detail ersichtlich, wie sie für den Schwingungserzeuger 5 bzw. die Schwingungsaufnehmer 6 verwendet wird. Dabei umfaßt die Magnetspule 7 einen Spulenkörper 9 sowie eine darauf angebrachte Wicklung 10. Wesentlich ist nun, daß der Spulenkörper 9 der Magnetspule 7 aus einem Material hergestellt ist, das eine hohe spezifische Wärmeleitfähigkeit aufweist. Das Material für die Magnetspule 9 ist ein thermisch leitfähiges Elastomer mit einer spezifischen Wärmeleitfähigkeit von 10 W/(K m) vorgesehen, konkret nämlich leitfähiges Polyphenylensulfid. Auf diese Weise wird erreicht, daß die in der Magnetspule 7 entstehende Wärme gut an die Umgebung abgeleitet wird, ohne daß zusätzliche Kühlbleche o.ä. vorgesehen werden müssen.

## Patentansprüche

1. Massendürchflußmeßgerät, das nach dem Coriolis-Prmzip arbeitet, mit einem Meßrohr (1) und einem Schwingungserzeuger (5) oder/und einem Schwingungsaufnehmer (6) zur Anregung bzw. Erfassung von Schwingungen des Meßrohrs, wobei der Schwingungserzeuger (5) bzw. der Schwingungsaufnehmer (6) eine Magnetspule (7) mit einem Spulenkörper (9) und einer darauf angebrachte Wicklung (10) aufweist und der Spulenkörper (9) der Magnetspule (7) eine spezifische Wärmeleitfähigkeit von wenigstens 1 W/(K m) aufweist, **dadurch gekennzeichnet, daß** der Spulenkörper (9) der Magnetspule (7) aus thermisch leitfähigem Polyphenylensulfid besteht.

2. Massendurchflußmeßgerät nach Anspruch 1, **dadurch gekennzeichnet, daß** der Spulenkörper (9) der Magnetspule (7) eine spezifische Wärmeleitfähigkeit von 10 W/(Km) aufweist.

## Claims

1. Mass flowmeter using the Coriolis principle having one measuring tube (1) and a vibration generator (5) and/or a vibration sensor (6) for exciting or detecting vibrations of the measurement tube, wherein the vibration generator (5) or the vibration sensor (6) has a magnet coil (7) with a bobbin (9) and a winding (10) attached to it and the bobbin (9) of the magnet coil (7) having a specific thermal conductivity of at least 1 W/(K m) **characterized in that** the bobbin (9) of the magnet coil (7) consists of thermally conductive polyphenylene sulfide.

2. Mass flowmeter according to claim 1, **characterized in that** the bobbin (9) of the magnet coil (7) has a specific thermal conductivity of 10 W/(K m).

## Revendications

1. Débitmètre massique fonctionnant selon le principe de Coriolis, comprenant un tube de mesure (1) et un générateur d'oscillations (5) et/ou un enregistreur d'oscillations (6) pour l'excitation ou la réception d'oscillations du tube de mesure, le générateur d'oscillations (5) ou l'enregistreur d'oscillations (6) présentant une bobine magnétique (7) avec un corps de bobine (9) et un enroulement (10) sur celui-ci, et le corps de bobine (9) de la bobine magnétique (7) présentant une conductibilité thermique spécifique d'au moins 1 W/(K m), **caractérisé en ce que** le corps de bobine (9) de la bobine magnétique (7) se compose de sulfure de polyphénylène conducteur thermique.

2. Débitmètre massique selon la revendication 1, **caractérisé en ce que** le corps de bobine (9) de la bobine magnétique (7) présente une conductibilité thermique spécifique de 10 W/(K m),
